# EUROPEAN PATENT APPLICATION

(11) **EP 1 298 465 A1**
(43) Date of publication of application: **02.04.2003**
(21) Application number: 01123499.4
(22) Date of filing: 28.09.2001
(51) Int. Cl.: G02B 6/28

(54) **Tunable optical delay line**

(71) Applicant: SIEMENS AKTIENGESELLSCHAFT, 80333 München (DE)
(72) Inventor: Spaelter, Stefan, Dr., 81477 Muenchen (DE)

(57) **Abstract**

A fast tunable optical delay line is disclosed having a plurality of fiber gratings (10, 12) connected via a circulator (14). The gratings may be Fiber Bragg Gratings and may be inverse from one another. In operation, an optical signal (OS) is directed to a first grating (10), reflected and then received from a second grating (12) reflected and outputted. At least one of the grating is temperature tunable so as to cause a desired delay or acceleration in the reflected signal. The present invention may be employed for synchronization if two optical signals..

## Description

The present invention concerns an optical delay line according to claim 1 and a method and apparatus for tuning it according to claims 1 through 10.

Optical delay lines are used in controlling the transit time and in particular the phase of an optical signal being transmitted between two points. Delay lines are required for many all optical application where the transit time and in particular that different path lengths need to be adjusted. For example optical delay lines allow the synchronization of one optical signal to another optical signal.

Generally, long distance optical transmission, terrestrial and submersed, comprise a collection of cooperating optical nodes, regenerators, and add-drop circuits. The nodes effect switching of various signals while the regenerators amplify and restore signals and the add-drop-circuits withdraw one signal at a particular wavelength and reinsert into the network another signal of the same wavelength.

Switching generally entails the combining of optical signals carried on fibers meeting at the node. Such combining requires synchronization of the signals. Where one signal is 'ahead' of another, an adjustment of the optical path length or delay of the faster signal is necessary for synchronization. The delay can be effected by routing the faster signal through a select length of fiber, or a optical delay line.

Several methods have been proposed in the prior art for an all-optical delay line. A first example is set out in IEEE Photon. Technol. Lett. 11, pages 1183 - 1185 (1999) which sets out that the signal is switched on fibers of different lengths either by manually changing patchcords or via use of electro-optical switches.

A second example is set out in Z.A. Yasa and N.M Amer, in Optics Communication, V36, pages 406 - 408 (1981). Herein, a variable free space section in between two optical fibers is used in delaying an optical signal. In particular, the free space section is varied by mechanically moving one of the fibers against the other by means of a translation stage. In addition, rotating parallel mirror assemblies have been used in order to vary the optical path length.

A third example is set out by GW Yoffe et al. in Electronic Letters V.34, No. 17, pages 1688-1690, August 20, (1998). Herein a uniform fiber Bragg grating is used where the point of reflection is varied by moving a heater along the grating. Hereto mechanical parts are required leading to the complications set out above.

The above discussed optical delay lines have several disadvantages or problems which the present invention addresses. The use of long fibers for delaying signals requires over a kilometer of fiber for a delay of a few microseconds. With such lengths, one encounters temperature or environmental perturbations to the optical path length, making the delay line unstable. The above method of switching a signal onto fibers of different lengths has the disadvantage that the discontinuous change in optical path length is unacceptable in many signal-processing applications. The above method of varying the free space between two fibers by moving one of the fibers against the other has the disadvantage of relying upon moving mechanical parts which may be slow, bulky, and increase losses during operation. The above method of moving a heater along a grating also has the disadvantage or relying upon moving mechanical parts.

As such, a need exists for a reliable delay line to overcome the effects of the perturbations. Likewise, tunability ensures reconfigurability of the time delay for OTDM demultiplexing and related applications. To overcome the above disadvantages, a fast tunable delay line, having no moving mechanical parts and a high degree of reliability, as well as reduced costs through reliance on fewer parts, is needed.

The disadvantages are solved and the needs met by an all optical delay line according to claim 1.

The present invention further comprises a method of delaying an optical signal according to claim 7 using an optical delay line.
Figure 1 shows an example of the invention,
Figure 2 shows a function of the invention at a different temperature,
Figure 3 shows a graphical relationship between delay and wavelength, and
Figure 4 shows an example of a phase control circuit using the invention.

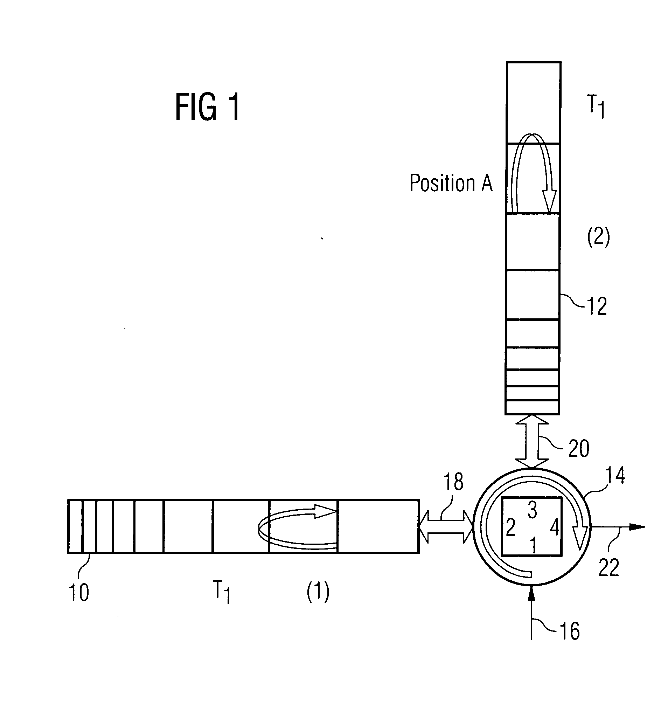

An embodiment of the delay line is set out in Figure 1. As depicted, the delay line comprises two chirped Bragg fiber gratings 10 and 12. The gratings may be linearly chirped. While the depicted number of gratings is two, the number may be varied, for example 4, 6 or other number envisioned by one skilled in the art. A optical circulator 14, or it's functional equivalent, is positioned so as to direct and receive light from the gratings. Optical circulators are well known in the art and normally comprise a series of bidirectional ports and a "non-reciprocal" mapping between ports. For example, in a optical circulator device, the ports may be designated 1, 2, 3 and 4 and the nature of the device is such that an input signal at Port 1 will be outputted at Port 2, an input signal at Port 2 will be outputted at Port 3 and an input signal at Port C will be outputted at Port A. In the present embodiment, the circulator has four ports designated. Where the number of gratings increases (from the current number of two), the number of ports likewise increases.

An operation of the present invention will now be described. An optical signal OS is received into circulator 14, at port 1, via an optical fiber 16. The circulator then effects the transmission of the signal into the first grating 10 at port 2. The optical signal is then reflected back to the circulator by the grating. The passage of the light is depicted by double sided arrow 18 and may be facilitated by means known to one skilled in the art. The circulator then effects the transmission of light into the second grating 12 at port 3. he second grating reflects the light to the circulator via double sided arrow 20.The delayed optical signal OS2 is then passed out of the circulator at port 4 marked by single sided arrow 22. The temperatures of the gratings effect a desired acceleration or delay in the signal.

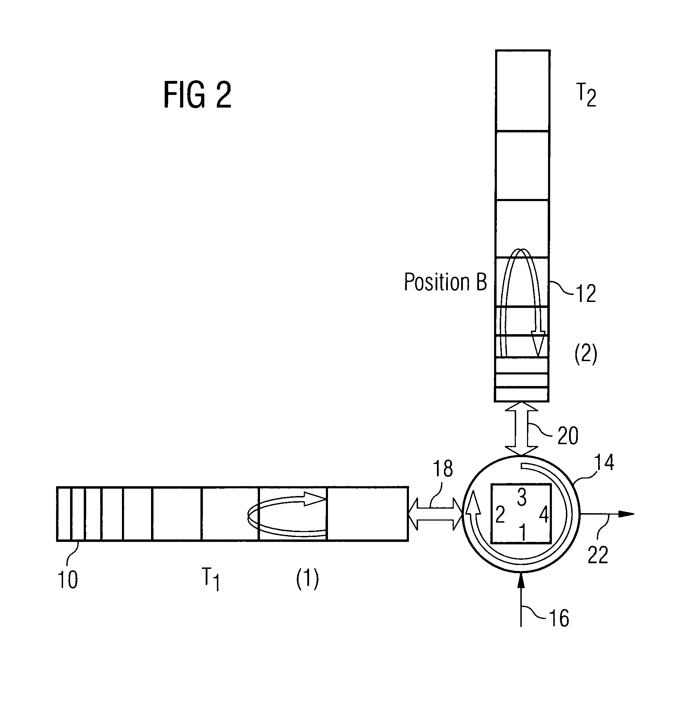

The present apparatus includes known means for applying and varying temperature of at least one of the gratings. The temperature varying means is not depicted in the drawings. At a first temperature T1, the signal is reflected at position K in grating 10, and at position A in grating 12 (Figure 1). At a second temperature T2, applied to the second grating 12, the reflection occurs at location B along in the grating 12 (see Fig. 2). In comparing the two locations A and B, by effecting temperature of the grating, the reflected signal may be delayed or moved forward.

Reflections from the gratings, especially chirped gratings lead to pulse distortion. An initial pulse will be strongly distorted in the first chirped grating 10. By reflecting the distorted pulse from the second inverse chirped grating the initial pulse is restored.

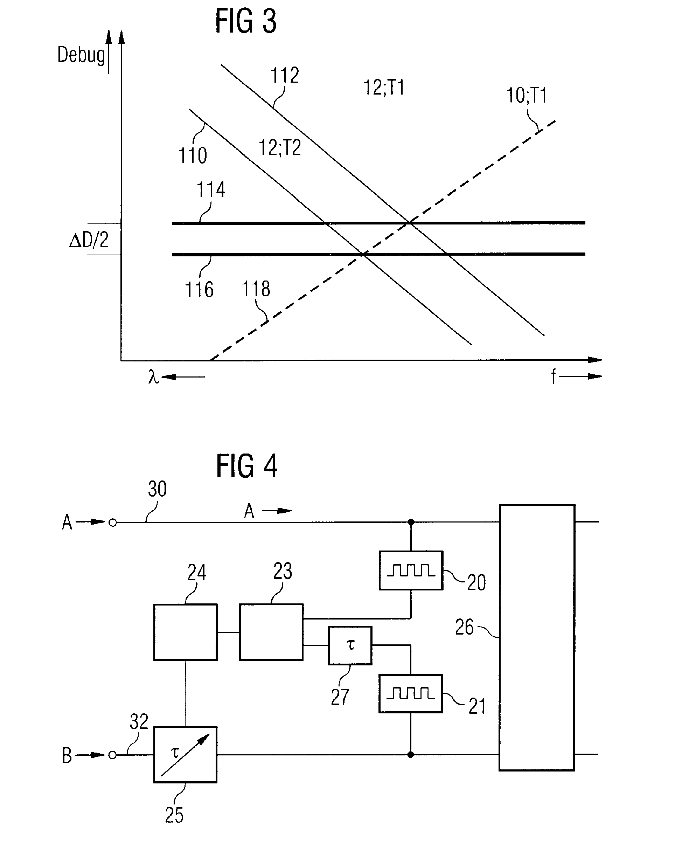

The relationship of delay and wavelength, as produced by the embodiment set out in Figures 1 and 2, is graphically depicted in Fig. 3. The overall signal delay is the product of the combined delays effected by both gratings. The broken lines 110, 112 and 118 show the individual delay of the gratings 10 and 12 as function of the wavelength λ / frequency f at different temperatures T₁ and T_{2.} The distance of the drawn through lines 114, 116 shows the delay difference (for different temperatures of the gratings.

In particular, the line 112 depicts the relationship between the wavelength of the signal and the signal's delay as the signal is directed into and reflected by grating 12 at temperature T1. This situation is depicted in figure 1, where the signal is reflected at position A. Per the graph of figure 3, as the wavelength of the signal increases, the delay increases because the reflection point of the grating is reached later. By applying a higher temperature T2 to the grating 12 the delay decreases as shown in line 110, where the signal is reflected at position B. Likewise, line 118 depicts the situation of grating 10 at temperature T1 (see Figure1, position A).. As the grating temperature T₁ remained unchanged between figures 1 and 2, only one line 118 in figure 3 is devoted to grating 10. The delay difference of the embodiment caused by different temperatures is shown in the horizontal lines 114 and 116. It is independent of the wavelengths and depends only on the temperature difference between booth gratings.

By way of example, first the signal is reflected from the chirped fiber Bragg grating at a typical group velocity of - 870ps/nm for the grating. Next, the signal is reflected from a second chirped Bragg fiber grating. The grating is uniformly heated. The dispersion of the second grating is the same as the first grating but with an opposite sign - i.e. +870 ps/nm. While the dispersion is independent of temperature, the group delay does change with temperature. In this example, the group delay changes at a rate of 11ps/°K. Therefore group delays of several 100 ps are easily achieved by heating or cooling one of the gratings. For example, the second grating may be heated by 1.14°C, the pulse train is sped up by 12.5ps corresponding to one bit slot in a 80Gb/s line rate transmission system.

Practical applications of the present optical delay line include the synchronization of different bit phases of data streams guided along different fibers. The synchronization is necessary when bringing the streams together. As is known, the bit phases may fluctuate for a variety of reasons including functions of time, mechanical, and/or thermal influences. The synchronization (if temporary) is necessary in a node cross connecting different tributaries and may be performed per the operation and apparatus described above.

An arrangement for synchronization of two data signals A and B is shown in fig 4. This arrangement makes use of the present inventive optical delay line. A first signal A is received along line 30. A second signal B is input along line 32 over a delay line 25.The clock signal of the first and second signals are derived at clock signal regenerators 20 and 21. The clock signal of the first and second signals are derived at clock signal regenerators 20 and 21. The clock signals are compared with an exclusive OR gate 23. A fixed delay 27 simplifies the control circuit. The crosscorrelation product of two derived clock signals may be optimized by tuning the delay line 25. The output of the OR gate 23 is fed into a controller 24. The controller may be aided by an integrator or low pass filter incorporated therein. The controller then outputs a control signal to the optical delay line 25 to appropriately delay signal B so that it may be synchronized with signal A.
Frequency deviation among the different data streams may be eliminated by regeneration techniques.
Likewise, a different control parameter for synchronization may be derived in the following manner. Clock recovery, per regeneration methods, is performed on the incoming signal A. When RZ Pulses are transmitted the clock pulses with a duty cycle duration of a data bit are compared (multiplied) with the data bits of the Signal B. The amplitude is maximized by tuning the delay line placed in either of the input fibers.

The invention is not limited to the particular details of the apparatus depicted and other modifications and applications are contemplated. Certain other changes may be made in the above described apparatus without departing from the true spirit and scope of the invention herein involved. It is intended, therefore, that the subject matter in the above depiction shall be interpreted as illustrative and not in a limiting sense.

## Claims

1. An optical delay line for delaying an optical signal, the optical delay line comprising:
an input fiber (16),
an output fiber (22),
a circulator (14 ),
a first chirped fiber Bragg grating (10),
a second chirped fiber Bragg grating (12), said second grating (12) being inverse chirped inverse to said first grating(10), and
means for tuning at least one of said first and second fiber Bragg grating (12), wherein the first chirped fiber grating receives an optical input signal (OS) from the circulator (14 )and provides a first reflected, signal, and the second chirped fiber receiving said first reflected signal from the circulator and provides a second reflected signal (OS2), such that distortion of the first reflected signal is compensated.

2. The optical delay line according to claim 1, wherein said tuning means comprises means for applying a select temperature to at least one of said first and second fiber Bragg grating for stretching at least one of the gratings.

3. The apparatus according to claims 1 and 2, further comprising means for mechanically stretching at least one of the gratings.

4. The apparatus according to claim 1 to 3, wherein the first and second chirped fiber gratings are linearly chirped.

5. The apparatus according to claims 1-4, further comprising synchronization means for generating a control signal derived from a first binary signal (A) and a second binary signal (B), using said control signal to determine the delay of at least one fiber grating so as to synchronize the first binary signal with the second binary signal.

6. A method of delaying an optical signal (OS) using an optical delay line, comprising the steps of:
- directing the optical input signal (OS) into the first chirped grating thereby causing a first reflection; and
- directing a first reflected signal into the second inverse chirped grating thereby causing a second reflection and outputting a second reflected signal (OS2) which distortion of the first reflection is compensated.

7. The method according to claim 6, further comprising the step of applying a temperature to the first and/or second Bragg grating so as to achieve a preselected delay for the second reflected signal.

8. The method according to claim 6, further comprising the step of mechanical stretching the first and/or second Bragg grating so as to cause a preselect delay for the reflected.

9. The method according to claims 6-8, further comprising the step of electing grating temperature or a stretching force based on a control signal derived from the first and second binary signal or on clock signals being derived from said binary signals.

10. The method according to claim 6-9, further comprising means for deriving a clock signal from a first signal, using the phase difference between the clock signals as a control parameter for selecting the temperature.

11. The method according to claim 6-10, further comprising the step of using the optical delay line in an optical node for synchronizing a first signal (A) and at least a second optical signal (B).
